# EUROPÄISCHE PATENTANMELDUNG

(11) **EP 1 543 934 A1**
(43) Veröffentlichungstag der Anmeldung: **22.06.2005**
(21) Anmeldenummer: 04029381.3
(22) Anmeldetag: 10.12.2004
(51) Int. Cl.: B29C 43/18, B29C 45/14, B29C 45/37

(54) **Formteil mit Textildekor**

(30) Priorität: 17.12.2003 AT 89903 U
(71) Anmelder: Intier Automotive Eybl GmbH (Ebergassing) & Co. OHG, 2435 Ebergassing (AT)
(72) Erfinder: Brückler, Manfred Ing., 7000 Eisenstadt (AT); Sommer, Daniela Dipl.-Ing., 1120 Wien (AT); Eiweck, Konrad Ing., 7000 Eisenstadt (AT)
(74) Vertreter: Vinazzer, Edith, Dipl.-Ing.

(57) **Zusammenfassung**

Die Erfindung betrifft ein Formteil (1) bestehend aus einem Kunststoffträger (2) und einer Dekorschicht (3), welches durch Hinterpressen oder Hinterspritzen in einem Werkzeug (4) hergestellt ist, welches auf den Kunststoffträger zumindest bereichsweise eine Oberflächenstruktur übertragen hat.

Die Dekorschicht (3) besteht aus einem engmaschigem, dehnbaren, textilen Material mit einem Flächengewicht zwischen 40 und 200 g/m², welches unter Dehnung der im Kunststoffträger eingeprägten Oberflächenstruktur folgt, ohne selbst strukturiert worden zu sein.

## Beschreibung

Die Erfindung betrifft ein Formteil bestehend aus einem Kunststoffträger und einer Dekorschicht, welches durch Hinterpressen oder Hinterspritzen in einem Werkzeug hergestellt ist, welches auf den Kunststoffträger zumindest bereichsweise eine Oberflächenstruktur übertragen hat.

Aus der WO 02/38352 A1 ist ein Verfahren zur Herstellung eines Formteiles bestehend aus einem Kunststoffträger und einem Gewebe als Dekorschicht bekannt, bei dem ein Werkzeug verwendet wird, das auf seiner mit dem Dekormaterial in Berührung kommenden Oberfläche eine Oberflächenstruktur aufweist, welche beim Pressvorgang durch das Dekormaterial auch auf das Kunststoffmaterial übertragen wird.

Aus der DE 198 51 117 A1 ist ein Verfahren zur Herstellung eines Formteiles durch Hinterspritzen oder Hinterpressen bekannt, bei dem ein Dekormaterial mit einer unebenen Oberfläche, beispielsweise Leder, in einem Werkzeug hinterpresst oder hinterspritzt wird, dessen mit dem Dekormaterial in Berührung tretende Oberfläche eine Oberflächenstruktur aufweist. Beim Hinterspritzen oder Hinterpressen wird die Oberflächenstruktur des Werkzeuges auf die Oberflächenstruktur des Dekormaterials zur Einwirkung gebracht und zusätzlich eingeprägt. Auf diese Weise soll vor allem die Ledernarbung im Dekormaterial erhalten bleiben oder geschaffen werden. Es ist bekannt, dass die ursprüngliche Oberflächenstruktur von Dekormaterialen beim Hinterspritzen oder Hinterpressen oft stark geglättet wird und insbesondere beim Hinterspritzen oder Hinterpressen von Leder die charakteristische Ledernarbe stark abgeflacht wird bzw. sogar vollständig verloren geht.

Bislang ist es vor allem üblich, bei Formteilen, die durch Hinterspritzen oder Hinterpressen hergestellt werden, das Dekormaterial, beispielsweise ein Textil, welches ein Gewebe, Gewirke oder ein Gestricke sein kann, auf eine Vliesschicht zu kaschieren. Das Vlies verleiht dem fertigen Formteil die erwünschte Haptik und stellt die Verbindung zum Kunststoff her. Der Verbund aus dem auf ein Vlies aufkaschierten Dekormaterial weist ein Flächengewicht in der Größenordnung von 200 g/m² bis 400 g/m² auf und hat somit einen erheblichen Anteil am Gesamtgewicht des Formteiles. Die Vliessicht kann ferner nicht verhindern, dass das äußere Dekor während des Formvorganges optisch verändert wird und nicht mehr das ursprüngliche Aussehen hat.

Der Erfindung liegt die Aufgabe zu Grunde, ein Formteil der eingangs genannten Art zur Verfügung zu stellen, welches bei einem geringeren Gewicht ein einwandfreies Äußeres aufweist sowie einfach und kostengünstig herstellbar ist.

Gelöst wird die gestellte Aufgabe erfindungsgemäß dadurch, dass die Dekorschicht aus einem engmaschigem, dehnbaren textilen Material mit einem Flächengewicht zwischen 40 und 200 g/m² besteht, welches unter Dehnung der im Kunststoffträger eingeprägten Oberflächenstruktur folgt, ohne selbst strukturiert worden zu sein.

Bei einem erfindungsgemäß ausgeführten Formteil bleibt das Dekormaterial während des Herstellvorganges durch Hinterpressen oder Hinterspritzen optisch einwandfrei erhalten. Das textile Material selbst ist gemäß der im Träger eingeprägten Struktur nicht verformt sondern folgt durch Dehnung dieser Struktur. Die Verwendung eines engmaschigen und gleichzeitig dehnbaren textilen Materials macht dies möglich. Das Formteil weist eine sehr zufrieden stellenden Optik auf und hat durch das geringe Flächengewicht des Dekormaterials ein geringeres Gewicht. Das Formteil ist ferner kostengünstig herstellbar, insbesondere auch in Folge der erzielbaren Materialeinsparung, die sich dadurch ergibt, dass bei getrennt hergestellten aber aneinander anzufügenden Bauteilen keine Bedachtriahme mehr auf die sonst üblicherweise verwendeten besonders strukturierten Textilien erfolgen muss.

Bevorzugt wird ein textiles Material verwendet, dessen Flächengewicht kleiner oder gleich 160 g/m² ist. Bei Verwendung eines solchen Materials macht sich die erzielte Gewichtsreduktion deutlich bemerkbar.

Das textile Material wird hinsichtlich seiner Dehnbarkeit entsprechend der Gestalt des Formteiles und der Feinheit der Oberflächenstruktur des Werkzeuges ausgewählt. Es eignet sich vor allem ein textiles Material, welches in Längs- und in Querrichtung ein Dehnungsvermögen von 10% bis 50% bei 5 kp Belastung aufweist.

Es eignen sich verschiedene textile Materialien als Dekorschicht, insbesondere solche aus Polyester, Polyamid, Polypropylen oder Zellulose, wobei das textile Material ein Gestricke, ein Gewebe, ein Gewirke oder ein Vlies sein kann.

Weitere Merkmale, Vorteile und Einzelheiten der Erfindung werden anhand der Zeichnung, die ein Ausführungsbeispiel darstellt, näher beschrieben. Dabei zeigen
Fig. 1 einen Schnitt durch ein Werkzeug zur Herstellung eines erfindungsgemäß ausgeführten Formteiles und
Fig. 2 einen Ausschnitt eines Querschnittes durch ein erfindungsgemäßes Formteil.

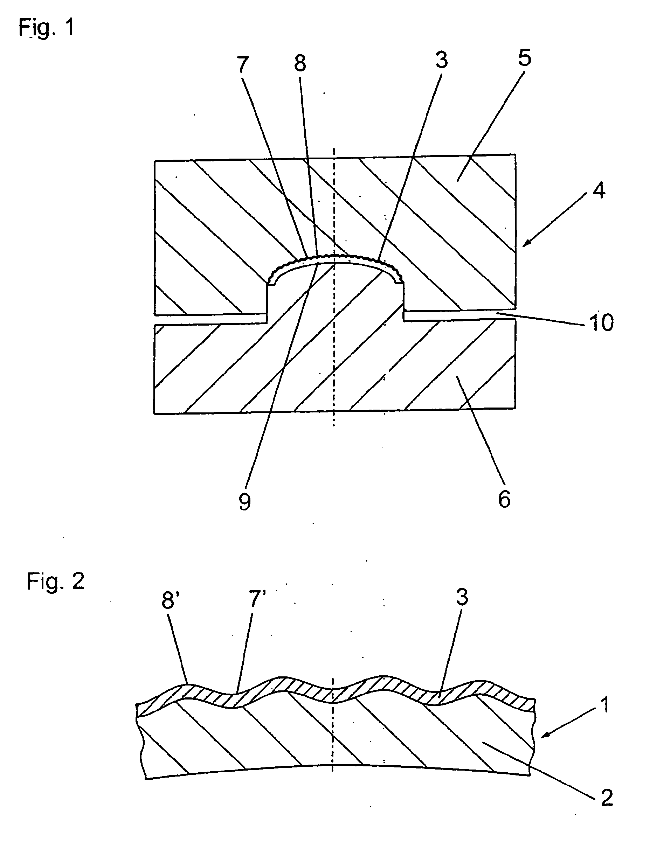

Fig. 2 zeigt einen Ausschnitt eines Formteil 1, welches beispielsweise ein Innenerkleidungsteil 1 für den Innenraum eines Kraftfahrzeuges, etwa eine Säulenverkleidung oder eine Türverkleidung, sein kann. Das Formteil 1 besteht aus einem Kunststoffträger 2 und einer äußeren Dekorschicht 3. Die unmittelbar auf dem Kunststoffträger 2 befindliche Dekorschicht 3 besteht aus einer Lage eines dünnen, engmaschigen und dehnbaren textilen Materials. Das textile Material kann beispielsweise Polyester, Polyamid, Polypropylen oder Zellulose sein. Von der Verarbeitung her kann das textile Material ein Gestricke, ein Gewebe, ein Gewirk oder ein Vlies sein. Durch die Verbindungsart der Fäden bzw. Fasern soll dabei sichergestellt sein, dass das textile Material in alle Richtungen gut dehnbar ist. Das Ausmaß der Dehnbarkeit muss jedoch nicht in alle Richtungen gleich sein. Insbesondere weist das Dekormaterial in Längs- und in Querrichtung ein Dehnungsvermögen zwischen 10% und 50% bei einer Belastung von 5 kp auf. Die Engmaschigkeit soll sicherstellen, dass während des Hinterspritzens oder Hinterpressens das Kunststoffmaterial durch das textile Material nicht durchtritt. Das Flächengewicht des textilen Materials beträgt zwischen 40 und 200 g/m² und ist insbesondere kleiner oder gleich 160 g/m². Die Oberseite des Kunststoffträgers 2 ist durch gleichmäßig verteilte Erhebungen 8' und Vertiefungen 7' strukturiert, das textile Material folgt durch seine Dehnbarkeit dieser Struktur.

Zur Herstellung eines erfindungsgemäßen Formteiles 1 ist beispielsweise das in Fig. 1 gezeigte Werkzeug 4 geeignet. Dieses besteht aus zwei Teilen 5, 6, einem Oberteil 5 und einem Unterteil 6, welche zum Öffnen und Schließen gegeneinander in bekannter Weise bewegbar sind.. Die beiden Werkzeugteile 5, 6 sind entsprechend der Form des herzustellenden Formteiles 1 ausgeführt, wobei die Innenseite des Werkzeugoberteils 5 an der Kontaktfläche zur Dekorschicht 3 strukturiert ist. Bei der dargestellten Ausführungsform besteht diese Struktur aus gleichmäßig verteilten und gleichmäßig ausgeführten Erhebungen 7 und Vertiefungen 8. Diese Oberflächenstruktur ist daher das Negativ der im fertigen Formteil 1 vorliegenden Struktur, sodass durch die Erhebungen 7 die Vertiefungen 7' und durch die Vertiefungen 8 die Erhebungen 8' entstehen. Die Erhebungen 7 und Vertiefungen 8 prägen sich daher durch das textile Material der Dekorschicht 3 hindurch in den Kunststoff des Trägers 2. Die sehr feine Struktur des textilen Materials beleibt daher erhalten.

Fig. 1 zeigt das geschlossene Werkzeug 4 bevor das Kunststoffmaterial eingespritzt wird, es ist daher zwischen dem eingebrachten Dekormaterial 3 und dem Werkzeugunterteil 6 ein entsprechender Spalt 9 vorhanden. Mit 10 ist das Tauchkantenspiel bezeichnet, durch welches sicher gestellt ist, dass die Kavität 9 trotz das überstehendem textilem Material abgedichtet wird.

Über das Werkzeug können verschiedene Strukturen auf das Formteil 1 übertragen werden. Von besonderem Vorteil ist die Möglichkeit, am Formteil 1 Schriftzüge, Markenzeichen, Bildelemente, Logos und dergleichen durch entsprechende Unterschiede in der Feinheit der Strukturen, durch Kombinationen von strukturierten mit nicht strukturierten Bereichen und dergleichen anzubringen.

Erfindungsgemäß ausgeführte Formteile 1 lassen sich ferner auch durch Hinterpressen oder Spritzprägen herstellen.

## Patentansprüche

1. Formteil bestehend aus einem Kunststoffträger und einer Dekorschicht, welches durch Hinterpressen oder Hinterspritzen in einem Werkzeug hergestellt ist, welches auf den Kunststoffträger zumindest bereichsweise eine Oberflächenstruktur übertragen hat,
**dadurch gekennzeichnet,**
**dass** die Dekorschicht (3) aus einem engmaschigem, dehnbaren, textilen Material mit einem Flächengewicht zwischen 40 und 200 g/m² besteht, welches unter Dehnung der im Kunststoffträger eingeprägten Oberflächenstruktur folgt, ohne selbst strukturiert worden zu sein.

2. Formteil nach Anspruch 1, **dadurch gekennzeichnet, dass** das Flächengewicht des textilen Materials kleiner oder gleich 160 g/m² ist.

3. Formteil nach Anspruch 1 oder 2, **dadurch gekennzeichnet, dass** das textile Material in Längs- und in Querrichtung ein Dehnungsvermögen von 10% bis 50% bei 5 kp Belastung aufweist.

4. Formteil nach einem der Ansprüche 1 bis 3, **dadurch gekennzeichnet, dass** das textile Material aus Polyester, Polyamid, Polypropylen, Zellulose oder dergleichen besteht.

5. Formteil nach einem der Ansprüche 1 bis 4, **dadurch gekennzeichnet, dass** das textile Material ein Gestricke, ein Gewebe, ein Gewirke oder ein Vlies ist.

6. Formteil nach einem der Ansprüche 1 bis 5, **dadurch gekennzeichnet, dass** die übertragene Oberflächenstruktur Schriftzüge, Markenzeichen, Bildelemente, Logos und dergleichen, entstanden durch Unterschiede in der Feinheit der Struktur, durch Kombinationen von strukturierten mit nicht strukturierten Bereichen und dergleichen, aufweist
